# EUROPEAN PATENT SPECIFICATION

(11) **EP 4 305 236 B1**
(45) Date of publication and mention of the grant of the patent: **18.12.2024**
(21) Application number: 22711051.7
(22) Date of filing: 08.03.2022
(51) Int. Cl.: D21C 7/06, B65G 33/18

(54) **REACTION CHAMBER, PROCESSING SYSTEM AND PROCESSING METHOD**
REAKTIONSKAMMER, VERARBEITUNGSSYSTEM UND VERARBEITUNGSMETHODE
CHAMBRE DE RÉACTION, SYSTÈME DE TRAITEMENT ET MÉTHODE DE TRAITEMENT

(30) Priority: 08.03.2021 GB 202103185
(43) Date of publication of application: 17.01.2024
(73) Proprietor: Trifilon AB, 611 39 Nyköping (SE)
(72) Inventor: LIDSTRAND, Martin, 611 39 Nyköping (SE)
(74) Representative: Bergenstråhle & Partners AB
(86) International application number: PCT/EP2022/055846
(87) International publication number: WO 2022/189409

(56) References cited:
- WO-A1-2016/055521
- WO-A1-2017/095042
- CN-A- 104 340 625

## Description

The present invention relates to apparatus and a process for chemical processing of fibrous material, namely material that comprises fibres that may freely move within the material to be processed. This should be understood to be distinct from solid material that contains fibres fixed within a matrix, for example such as wood chips. Such apparatus and processes may be used to process such fibrous material, which may come from a natural source, to produce processed fibres that can be used for a number of purposes. One particular application for such processed fibres is for use in reinforced composite materials.

Various industries, such as the paper and textile industries, make use of natural fibres. The natural fibres, which are derived from natural sources such as, but not limited to, trees or other plants, may be treated after they have been separated from their originating structure to form a fibrous material in order to improve the suitability of the fibres for particular applications.

In known processes, the fibrous material may be added in batches to a tank to which various reagents may be added for a desired period of time under required processing conditions, such as controlled temperature and pressure, before unused reagents and/or waste products are removed. For each step in a process, different reagents may be added to or removed from the tank to perform multiple steps to a batch of material in a single tank or each step in a process may be performed in a different tank, with the batch of fibrous material transported between tanks for each step to be performed.

However, processing material in batches may be inefficient and may result in variations of quality and/or material properties between batches.

WO 2017/095042 A1 discloses biomass pretreatment technology via a controlled feeding system of fibrous biomass into a continuous high-pressure reactor. CN 104 340 625 A discloses a double-screw inclined screw conveyor. WO 2016/055521 A1 discloses a drainer for continuously draining a liquid from a slurried thermally treated lignocellulosic biomass stream.

The present invention aims to at least partly solve the above-mentioned problems.

According to an aspect of the present invention, there is provided a reaction chamber as defined in appended claim 1.

In an arrangement, the transporter comprises a second screw, arranged parallel to the first screw and extending along the elongate cavity from the input section to the output section.

In an arrangement, the transporter is configured such that the first and second screws rotate in the same direction to drive fibrous material from the first end to the second end of the elongate cavity.

In an arrangement, the reaction chamber further comprises a gearbox configured to drive both screws from an input of motive force from a single motor.

In an arrangement, the reaction chamber is configured such that the elongate cavity can be maintained at a pressure that is different from the atmospheric pressure, optionally greater than atmospheric pressure.

In an arrangement, the difference in pressure between the elongate cavity and atmosphere can be maintained at greater than 1 bar, optionally greater than 5 bar, optionally greater than 7 bar and optionally up to 10 bar.

In an arrangement, the input section is configured to feed fibrous material into the first end of the elongate cavity while maintaining the pressure difference between the elongate cavity and atmosphere.

In an arrangement, the output section is configured to output fibrous material from the second end of the elongate cavity while maintaining the pressure difference between the elongate cavity and the atmosphere.

In an arrangement, the elongate cavity is positioned such that the second end is higher than the first end.

In an arrangement, the reaction chamber further comprises at least one reagent port in fluid communication with the input section, output section or the elongate cavity and that is configured to supply a chemical reagent into the elongate cavity.

In an arrangement, the reaction chamber further comprises at least one reagent port in fluid communication with the input section, output section or the elongate cavity and that is configured to remove unused chemical reagents and/or waste products from the elongate cavity.

In an arrangement, a screw within the transporter comprises an interior cavity extending along its length and a plurality of perforations that provide fluid communication between the interior cavity of the screw and the elongate cavity of the reaction chamber around the screw; and
the interior cavity of the screw is in fluid communication with at least one reagent port configured to supply chemical reagent to the interior cavity or to remove from the interior cavity unused chemical reagents and/or waste products.

In an arrangement, within at least one region the screw comprises said perforations; and within at least one other region the screw does not have said perforations.

In an arrangement, the reaction chamber further comprises a temperature controller, configured to control the temperature of the contents of the elongate cavity.

In an arrangement, at least one region is associated with a temperature controller configured to control the temperature of the contents of the elongate cavity in that region alone.

According to an aspect of the present invention, there is provided a processing system for continuous chemical processing of fibrous material, comprising at least one reaction chamber as above.

In an arrangement, a plurality of reaction chambers as above may be arranged to process fibrous material successively.

In an arrangement, at least two reaction chambers are configured differently from each other.

In an arrangement, a single unit functions as the output section of a first reaction chamber and the input section of a second reaction chamber.

According to an aspect of the present invention, there is provided a method of continuous chemical processing of fibrous material as defined in appended claim 14.

In an arrangement, the chemical processing is performed using a reaction chamber as above.

The invention will now be described by way of example only with reference to the accompanying figures, in which:
Figure 1 depicts an example of a reaction chamber according to an aspect of the present invention;
Figure 2 depicts a transporter for use within a reaction chamber;
Figure 3 depicts a detail of a transporter according to an aspect of the invention;
Figure 4 depicts a partial view of a reaction chamber according to an aspect of the invention; and
Figures 5 and 6 depict, in exploded and assembled views, respectively, a processing system according to an aspect of the invention.

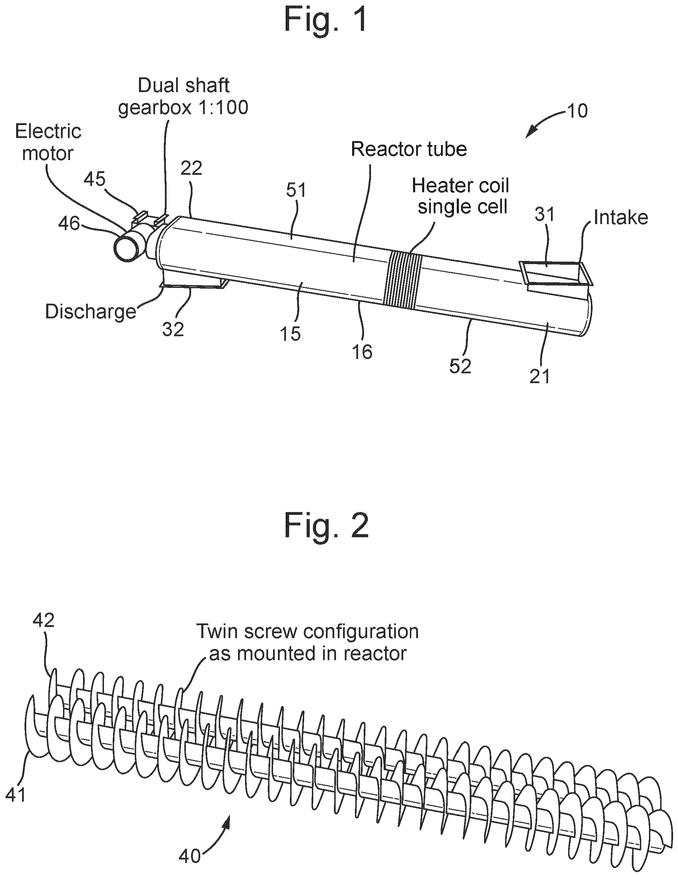

Figure 1 schematically depicts an arrangement of a reaction chamber 10 for continuous chemical processing of fibrous material. In an example, the reaction chamber may be used for processing fibrous material derived from biomass, including for example cellulosic substances. Examples of biomass substances that may be processed in the reaction chamber 10 include fibrous material derived from wood, straw, grass, seeds and similar materials. The fibrous material may be in an intermediate fibrous form such that one or more initial processes have been performed to separate the fibres from an originating structure in which the fibres were formed.

One or more of a variety of treatment steps may be performed on the fibrous material, namely the free-moving fibres separated from any originating structure in which the fibres were originally formed. The treatment steps may include delignification of the fibres, for example. The lignin present in plant cell walls lends rigidity to the original natural material, and may need to be removed to produce the desired properties in the processed fibres. Other processes performed on the fibrous material may include or facilitate processes such as digestion, degumming, bleaching and other similar common refinery process steps. Alternatively or additionally, the processes may be selected to at least one of remove hemicellulose, modify the surface energy of the fibres, de-bundling of fibres (for example into elementary fibres), modify fibril structures and/or add functional groups to the fibres. It should be appreciated that other processes may be performed on fibrous material within a reaction chamber 10.

The reaction chamber 10 includes an elongate cavity 15 having first and second ends 21, 22. First and section ends, 21, 22 are arranged at opposite ends of the elongate cavity 15 with respect to the elongate direction. The elongate cavity 15 may be defined by an outer wall 16 such that the elongate cavity can contain fibrous material added to it and any reagents used for chemical processing.

At the first end 21 of the elongate cavity, an input section 31 is provided that is configured to feed fibrous material into the first end 21 of the elongate cavity 15. At the second end 22 of the elongate cavity 15 an output section is provided that is configured to output fibrous material from the second end 22 of the elongate cavity.

The reaction chamber 10 further includes a transporter that, in use drives the fibrous material from the first end 21 to the second end 22 of the elongate cavity. In such an arrangement, the fibrous material may be continuously processed as it is transported through the reaction chamber without the need to provide separate process tanks for processing of the fibrous material in batches or separate transportation systems to transfer the material between tanks.

The transporter includes a screw 41 that is rotated in order to drive the fibrous material from the first end 21 to the second end of the elongate cavity 15. Such a screw 41 is provided within the elongate cavity 15 and the outer wall 16 defining the elongate cavity 15 may be positioned closely to the edges of the screw 41. Such an arrangement may minimise reverse flow of material between the edges of the screw 41 and the wall 16. In some arrangements, the separation between the edge of the screw 41 and the wall 16 may be selected such little or no fibrous material flows in the reverse direction (namely from the second end 22 towards the first end 21) but such that liquid can flow in this direction.

As shown in Figure 2 which shows an arrangement of a transporter 40, the transporter 40 may include first and second screws, 41, 42. The two screws 41, 42 may be arranged parallel to each other and such that the central axis of rotation of the two screws, 41, 42 is parallel to the elongate direction of the elongate cavity 15.

In a particular arrangement, the transporter 40 may be configured such that, in use, the first and second screws, 41, 42 rotate in the same direction as each other in order to drive fibrous material from the first end 21 to the second end 22 of the elongate cavity 15. Such an arrangement, which may be referred to as having co-rotating screws, may be particularly beneficial for driving fibrous material along the elongate cavity 15. This is because the fibrous material with a tangle of free-moving fibres may be difficult to handle in a transporter. The use of co-rotating screws may provide a self-cleaning function, reducing the likelihood of fibrous material being retained within the elongate cavity 15 of the reaction chamber 10 for longer than is desired. The use of co-rotating screws may also provide improved mixing in the processing of fibrous material. In other arrangements, counter-rotating screws may be used.

In an arrangement as depicted in Figure 1, a single gearbox 45 may be provided that drives both screws 41, 42. A motor, for example and electric motor 46 may be provided to drive the gear box 45. Such an arrangement may be beneficial because it may simplify the control system for the reaction chamber 10 as only a single motor needs to be controlled.

Alternatively or additionally, the use of a single gearbox 45 that drives both screws 41, 42 may beneficially facilitate driving the first and second screws 41, 42 in perfect synchronism which may result in improved performance of the transporter. For example, synchronized screw motion may improve overall energy efficiency. This is because, if the screws are not in synchronism, the material distribution in between overlapping crests in the screw pitch can become too tight, leading to high packing of the fibre mass, which in turn leads to increased torque load in the drive unit.

It should be appreciated that other arrangements may also be used for driving the first and second screws 41, 42 including, for example, the use of separate motors for driving each screw. In such an arrangement, a suitable controller may be used to drive the screws 41, 42 in synchronism.

In an arrangement, the reaction chamber 10 may be configured such that the interior of the elongate cavity 15 can be maintained at a pressure that is different from atmospheric pressure. In an arrangement, the pressure within the elongate cavity 15 may be maintained at a pressure that is greater than atmospheric pressure. Alternatively or additionally, the reaction chamber 10 may be configured such that the elongate cavity 15 can be maintained at a lower than atmospheric pressure, for example a partial vacuum.

The reaction chamber 10 may be designed to maintain a pressure difference between the elongate cavity 15 and atmosphere that is a pressure greater than 1 bar, optionally a pressure greater than 5 bar, optionally a pressure greater than 7 bar and optionally up to a pressure difference of up to 10 bar. A pressure controller may be provided in order to operate the reaction chamber at a required pressure.

In order to enable continuous processing of the fibrous material within the reaction chamber 10 whilst maintaining a pressure difference between the elongate cavity 15 and atmosphere, the input section 31 and the output section 32 may be configured to feed fibrous material into the first end 21 of the elongate cavity and output fibrous material from the second end 21 of the elongate cavity 15, respectively, while minimising the ingress or escape of gas, such that the desired pressure can be maintained.

The input section 31 and output section 32 may be any convenient arrangement for achieving this function. For example, a cell feeder may be used, in which a unit with a plurality of cells, separated by leaves rotates. As each cell rotates, it transfers material from a first side of a barrier to a second side of the barrier but at any instant one or more leaves are sealed against a section of the barrier to prevent a reverse flow of fluid through the barrier. Alternatively or additionally, a plug screw feeder may be used that uses a screw to drive material into the elongate cavity 15. Either such an arrangement may introduce material into the cavity 15 against a pressure difference.

In an arrangement, the elongate cavity 15 may be positioned such that the second end 22 is at a higher elevation than the first end 21. In such an arrangement, while the transporter drives the fibrous material to move from the first end 21 to the second end 22 of the elongate cavity 15, liquid within the elongate cavity 15 may flow under the effect of gravity from the second end 22 to the first end 21. Such an arrangement may conveniently improve chemical processing. For example, a reagent may be introduced at the second end 22 that is gradually consumed during a chemical process. The reagent at the second end 22 will therefore be most concentrated at the second end 22 and encountering fibrous material at the second end 22 that is most processed and requires high concentration reagent in order to complete the chemical process. In contrast, the least processed fibrous material at the first end 21 encounters the lower concentration reagent. Such an arrangement may improve the efficiency of the chemical process

In an arrangement, the reaction chamber 10 may include at least one reagent port 51 that is configured to supply a chemical reagent into the elongate cavity 15. The one or more reagent ports 51 may supply the chemical reagent directly to the elongate cavity 15, or via the input section 31 or the output section 32 or some combination thereof. A reagent port 51 directly in fluid communication with the elongate cavity 15 may be located at any location along the length of the elongate cavity 15. It will be appreciated that, depending on the chemical process being performed on the fibrous material, plural reagent ports 51 may be provided to supply a chemical reagent at different points along the length of the elongate chamber 15, corresponding to different stages in the processing of fibrous material that is driven from the first end 21 to the second end 22 of the elongate chamber 15.

Similarly, one or more reagent ports 52 may be provided that are configured to remove unused chemical reagents and/or waste products resulting from the chemical process from the elongate cavity 15. As with the reagent ports 51 used to supply chemical reagents to the elongate cavity 15, the reagent ports 52 used to remove chemical reagents and/or chemical waste products may be in fluid communication with the input section 31, the output section 32 or directly with the elongate cavity 15 or any combination thereof. Furthermore, reagent ports 52 used to remove the unused chemical reagents and/or waste products from the elongate cavity 15 may be provided at plural locations along the elongate cavity 15 in order to remove chemical reagents and/or waste products at corresponding stages within the chemical process that is being performed on the fibrous material that is driven from the first end 21 to the second end 22 of the elongate cavity 15.

By means of the supply and/or removal of chemical reagents and/or waste products at different locations along the length of the elongate cavity 15, the conditions may be different for different regions of the elongate cavity 15, enabling different processes to be performed on the fibrous material in the different regions. It will be appreciated that the different regions, which in some contexts may be referred to as zones, may all be the same size or some or all of the regions may be different sizes.

In an arrangement in which the transporter includes one or more screws 41, 42, one of both screws 41, 42 may have an interior cavity extending along some or all of its length and perforations to enable fluid to pass between the interior cavity of the screw 41, 42 and the elongate cavity 15 of the reaction chamber 10 that is around the screw 41, 42. In such an arrangement, the interior cavity, 41, 42 may be in fluid communication with a reagent port 51, 52, in order to supply a chemical reagent to the interior cavity and then to the elongate cavity 15 or to remove from the interior cavity of the screw 41, 42 unused chemical reagents and/or waste products that have drained from the elongate cavity 15 of the reaction chamber 10 into the interior cavity of the screw 41, 42.

The elongate cavity 15 is divided into plural regions. In such an arrangement, the perforations between the interior cavity of the screw 41, 42 and the elongate cavity 15 around the screw 41, 42 may be provided in one or more regions and not provided in one or more different regions. As with the positioning of the reagent ports 51, 52 this may enable the control of the position along the length of the elongate cavity 15 at which reagents are provided to and/or reagents and/or waste products, are removed from the elongate cavity 15.

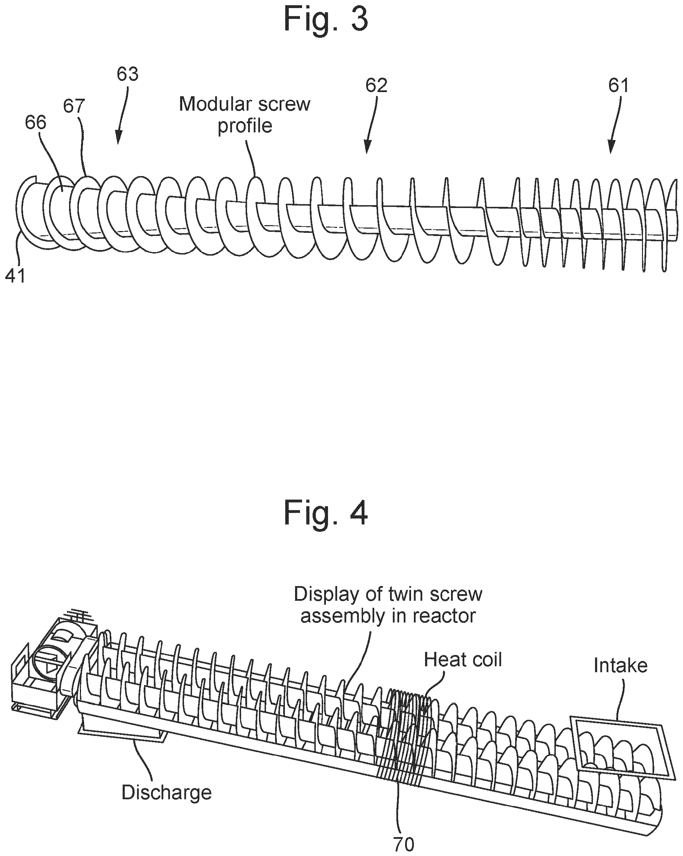

Other differences in processing conditions may also be provided between different regions of the elongate cavity 15. For example, Figure 3 depicts a screw 41 that may be used within a transporter within the elongate cavity 15 having 3 regions, 61, 62, 63. Comparing the first and second regions 61, 62, it will be seen that the pitch of the thread of the screw 41 is greater in the second region 62 than in the first region 61 such that the screw has variable pitch along its length. With such an arrangement, for a given speed of rotation of the screw 41, the fibrous material will move more slowly in the elongate direction of the elongate cavity 15, namely from the first end 21 to the second end 22, within the first region 61 in comparison to that within the second region 62. Accordingly the variable pitch of the screw may be used to control the conveying velocity.

Such an arrangement may be used to retain fibrous material within the first region 61 for a relatively longer time period and to relatively quickly move the fibrous material through the second region 62. By selection of appropriate pitch of the thread of the screw 41 within each region one may therefore control the relative time that the fibrous material spends within each region and is therefore subject to the processing conditions within that region.

Comparing the second region 62 to the third region 63 shown in Figure 3, it will be seen that, while the pitch remains constant, the distance between the central core 66 of the screw 41 and the outer edge 67 of the thread of the screw 41 is reduced in the third region 63 in comparison to that of the second region 62. This may be referred to as a screw with variable pitch line. The effect of this is to compress the fibrous material as it transfers from the second region 62 to the third region 63. This compression may, for example, be used to squeeze liquid from the bulk of the fibrous material, for example, to remove chemical reagents and/or waste products which, as discussed above may be removed from the elongate cavity 15, for example through one or more reagent ports 52.

It will therefore be understood that by selecting the design of the screw 41 in different regions of an elongate cavity 15, additional control of the movement of the fibrous material may be provided in addition to merely driving it from the first end 21 to the second end 22 of the elongate chamber.

In an arrangement, a temperature controller 70 may be provided to control the temperature of the contents of part, parts or all of the elongate cavity 15. Such an arrangement is schematically depicted in Figure 4, in which a heating system 70 is provided around one region or plural regions of the elongate cavity 15. It should be appreciated that such a heating system 70 may utilise one or more known arrangements, for example, providing liquid or gas through a conduit provided in or around the elongate cavity 15, an electric heater provided in or around the elongate cavity and/or by provision of a combustion system in or around the elongate cavity 15. It should also be appreciate that a temperature controller may alternatively or additionally include a refrigeration system.

Furthermore, it should be appreciated that the temperature controller may include a sensor for determining, directly or indirectly, the temperature of the contents of the elongate cavity 15 in the region of the temperature controller such that the heating and/or refrigeration can be controlled within that region, or within plural regions, to achieve a desired temperature.

The temperature controller may be used in order to assist in the control of or promotion of the chemical processing of the fibrous material. In arrangements in which it is desirable for the chemical processing to vary along the length of the elongate cavity 15, separate temperature controllers may be provided to one or more regions along the length of the elongate cavity such that distinct temperature zones can be provided in different regions of the elongate cavity 15.

As discussed above, in an arrangement, plural different processing conditions can be provided along the length of an elongate cavity 15 within a reaction chamber in order to provide varying conditions under which the fibrous material is processed.

For instance, as discussed above, the elongate cavity 15 is divided into plural regions, wherein different regions of the elongate cavity may have different processing conditions. The processing conditions that are varied between different ones of the plural regions may be, for instance, one or more of: the type and/or amount of chemical reagent supplied to the elongate cavity in each region; the type and/or amount of unused chemical reagent and/or waste products removed from the elongate cavity in each region; flow/movement characteristics (e.g. velocity and/or compression) of fibrous material in each region; and process temperature in each region. The division of an elongate cavity into plural regions with different processing conditions may enhance process control in the processing of fibrous material. This is because such processes may comprise multiple phases, in which the required or optimum process conditions vary from one phase to the next. The inclusion of plural regions as discussed above enables different process phases to be carried out in a single reaction chamber, thus enabling each phase of the process to be individually optimised. This provides an improvement in process efficiency compared with, for instance, an arrangement in which material is processed through a series of distinct reactors having different process conditions, or an arrangement in which material is processed in batches with varying conditions between each batch.

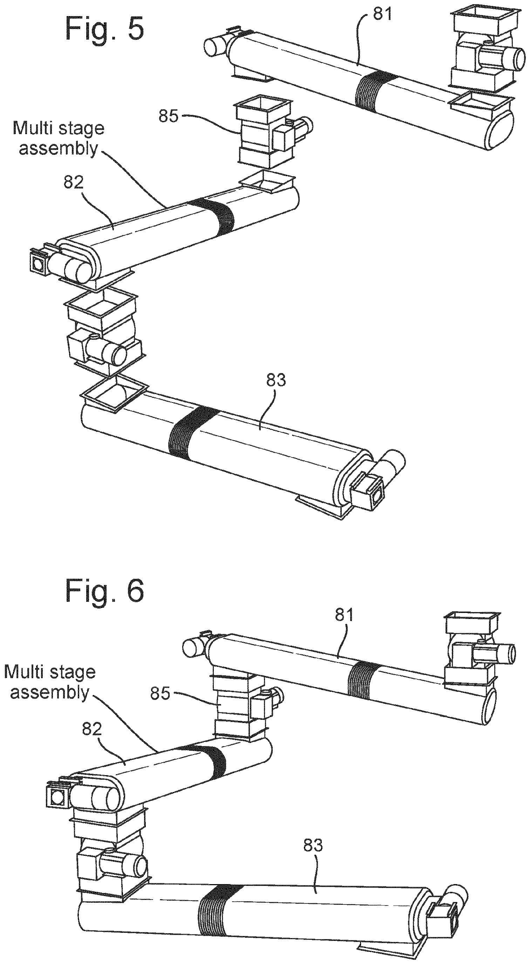

Alternatively or additionally, plural reaction chambers 81, 82, 83 may be joined in sequence, as depicted in Figures 5 and 6, such that the output of a first reaction chamber 81 is input into a second input chamber 82 and the output of the second reaction chamber 82 is output into a third reaction chamber 83.

It will be appreciated that any number of reaction chambers may be joined together in such a way in a processing system. It should also be appreciated that the reaction chambers 81, 82, 83 need not be directly joined. For example, between two reaction chambers a storage vessel could be provided to temporarily store an intermediate product.

It should also be appreciated that, in a processing system having plural reaction chambers as discussed above, two or more or all of the reaction chambers may be configured differently from each other, for example varying by any or all of the variations discussed above.

In an arrangement, where a first reaction chamber 81 is to be connected directly to a second reaction chamber 82, a single unit, such as a cell feeder 85 may function as both the output section of the first reaction chamber 81 and the input section of the second reaction chamber 82.

## Claims

1. A reaction chamber (10) for continuous chemical processing of fibrous material, comprising:
an elongate cavity (15) having first (21) and second (22) ends at opposite ends of the elongate cavity and configured to contain the fibrous material and any reagents added to it for chemical processing;
an input section (31) at the first end of the elongate cavity, configured to feed fibrous material into the first end of the elongate cavity;
an output section (32) at the second end of the elongate cavity, configured to output fibrous material from the second end of the elongate cavity; and
a transporter (40) configured to drive fibrous material from the first end to the second end of the elongate cavity,
wherein the transporter comprises a screw (41) extending along the elongate cavity from the input section to the output section, and
wherein the elongate cavity comprises plural regions (61, 62, 63), and at least one of the pitch of the screw or screws and the separation between the central core (66) of the screw or screws and the edge (67) of the screw or screws is different in one region of the elongate cavity from that of another region.

2. A reaction chamber according to claim 1, wherein the transporter comprises a second screw (42), arranged parallel to the first screw and extending along the elongate cavity from the input section to the output section, optionally wherein the transporter is configured such that the first and second screws rotate in the same direction to drive fibrous material from the first end to the second end of the elongate cavity.

3. A reaction chamber according to claim 2, further comprising a gearbox (45) configured to drive both screws from an input of motive force from a single motor (46).

4. A reaction chamber according to any one of the preceding claims, configured such that the elongate cavity can be maintained at a pressure that is different from the atmospheric pressure, optionally greater than atmospheric pressure.

5. A reaction chamber according to claim 4, wherein the difference in pressure between the elongate cavity and atmosphere can be maintained at greater than 1 bar, optionally greater than 5 bar, optionally greater than 7 bar and optionally up to 10 bar.

6. A reaction chamber according to claims 4 or 5, wherein the input section is configured to feed fibrous material into the first end of the elongate cavity while maintaining the pressure difference between the elongate cavity and atmosphere.

7. A reaction chamber according to any one of claims 4, 5 and 6, wherein the output section is configured to output fibrous material from the second end of the elongate cavity while maintaining the pressure difference between the elongate cavity and the atmosphere.

8. A reaction chamber according to any one of the preceding claims, wherein the elongate cavity is positioned such that the second end is higher than the first end.

9. A reaction chamber according to any one of the preceding claims, further comprising:
at least one reagent port (51) in fluid communication with the input section, output section or the elongate cavity and that is configured to supply a chemical reagent into the elongate cavity; and/or
at least one reagent port (52) in fluid communication with the input section, output section or the elongate cavity and that is configured to remove unused chemical reagents and/or waste products from the elongate cavity.

10. A reaction chamber according to claim 1 or claim 2, or any claim dependent therefrom, wherein a screw within the transporter comprises an interior cavity extending along its length and a plurality of perforations that provide fluid communication between the interior cavity of the screw and the elongate cavity of the reaction chamber around the screw; and
the interior cavity of the screw is in fluid communication with at least one reagent port (51, 52) configured to supply chemical reagent to the interior cavity or to remove from the interior cavity unused chemical reagents and/or waste products,
optionally wherein within at least one region the screw comprises said perforations; and within at least one other region the screw does not have said perforations.

11. A reaction chamber according to any one of the preceding claims, further comprising a temperature controller (70), configured to control the temperature of the contents of the elongate cavity, optionally wherein at least one region is associated with a temperature controller configured to control the temperature of the contents of the elongate cavity in that region alone.

12. A processing system for continuous chemical processing of fibrous material, comprising at least one reaction chamber according to any one of the preceding claims.

13. A processing system for continuous chemical processing of fibrous material according to claim 12, comprising a plurality of reaction chambers according to any one of claims 1 to 11, arranged to process fibrous material successively, optionally wherein:
at least two reaction chambers are configured differently from each other; and/or
a single unit functions as the output section of a first reaction chamber and the input section of a second reaction chamber.

14. A method of continuous chemical processing of fibrous material comprising:
feeding fibrous material into an input section (31) at a first end (21) of an elongate cavity (15);
outputting fibrous material from an output section (32) at a second end (22) of the elongate cavity at an opposite end of the elongate cavity from the first end; and
driving the fibrous material through the elongate cavity from the first end to the second end by way of a transporter (40), wherein the transporter comprises a screw (41) extending along the elongate cavity from the input section to the output section,
wherein the elongate cavity comprises plural regions (61, 62, 63), and at least one of the pitch of the screw or screws and the separation between the central core (66) of the screw or screws and the edge (67) of the screw or screws is different in one region of the elongate cavity from that of another region.

15. A method of continuous chemical processing of fibrous material according to claim 14, wherein the chemical processing is performed using a reaction chamber (10) according to any one of claims 1 to 11.

## Patentansprüche

1. Reaktionskammer (10) zur kontinuierlichen chemischen Verarbeitung von Fasermaterial, umfassend:
einen länglichen Hohlraum (15) mit einem ersten (21) und einem zweiten (22) Ende an einander gegenüberliegenden Enden des länglichen Hohlraums und dazu konfiguriert, das Fasermaterial und jegliche zur chemischen Verarbeitung zugegebenen Reagenzien zu enthalten;
einen Eingabeabschnitt (31) am ersten Ende des länglichen Hohlraums, dazu konfiguriert, Fasermaterial in das erste Ende des länglichen Hohlraums zuzuführen;
einen Ausgabeabschnitt (32) am zweiten Ende des länglichen Hohlraums, dazu konfiguriert, Fasermaterial aus dem zweiten Ende des länglichen Hohlraums auszugeben; und
einen Transporter (40), dazu konfiguriert, Fasermaterial von dem ersten Ende zum zweiten Ende des länglichen Hohlraums zu befördern,
wobei der Transporter eine Schnecke (41) umfasst, die sich entlang des länglichen Hohlraums von dem Eingabeabschnitt zum Ausgabeabschnitt erstreckt, und
wobei der längliche Hohlraum mehrere Bereiche (61, 62, 63) umfasst und sich mindestens eines von der Steigung der Schnecke oder Schnecken und dem Abstand zwischen dem zentralen Kern (66) der Schnecke oder Schnecken und dem Rand (67) der Schnecke oder Schnecken in einem Bereich des länglichen Hohlraums von dem entsprechenden Wert einem anderen Bereich unterscheidet.

2. Reaktionskammer nach Anspruch 1, wobei der Transporter eine zweite Schnecke (42) umfasst, angeordnet parallel zu der ersten Schnecke und sich entlang des länglichen Hohlraums vom Eingabeabschnitt zum Ausgabeabschnitt erstreckend, optional wobei der Transporter dazu konfiguriert ist, die erste und die zweite Schnecke in die gleiche Richtung zu drehen, um Fasermaterial von dem ersten Ende zu dem zweiten Ende des länglichen Hohlraums zu befördern.

3. Reaktionskammer nach Anspruch 2, ferner umfassend ein Getriebe (45), dazu konfiguriert, beide Schnecken durch die Antriebskraft eines einzelnen Motors (46) anzutreiben.

4. Reaktionskammer nach einem der vorhergehenden Ansprüche, dazu konfiguriert, den längliche Hohlraum auf einem Druck zu halten, der sich von dem Atmosphärendruck unterscheidet, optional höher als der Atmosphärendruck.

5. Reaktionskammer nach Anspruch 4, wobei der Druckunterschied zwischen dem länglichen Hohlraum und der Atmosphäre auf über 1 Bar, optional über 5 Bar, optional über 7 Bar und optional bis zu 10 Bar gehalten werden kann.

6. Reaktionskammer nach Anspruch 4 oder 5, wobei der Eingabeabschnitt dazu konfiguriert ist, Fasermaterial in das erste Ende des länglichen Hohlraums zuzuführen, während der Druckunterschied zwischen dem länglichen Hohlraum und der Atmosphäre aufrechterhalten wird.

7. Reaktionskammer nach einem der Ansprüche 4, 5 und 6, wobei der Ausgabeabschnitt dazu konfiguriert ist, Fasermaterial aus dem zweiten Ende des länglichen Hohlraums auszugeben, während der Druckunterschied zwischen dem länglichen Hohlraum und der Atmosphäre aufrechterhalten wird.

8. Reaktionskammer nach einem der vorhergehenden Ansprüche, wobei der längliche Hohlraum so angeordnet ist, dass das zweite Ende höher ist als das erste Ende.

9. Reaktionskammer nach einem der vorhergehenden Ansprüche, ferner umfassend:
mindestens einen Reagenzanschluss (51) in Fluidverbindung mit dem Eingabeabschnitt, dem Ausgabeabschnitt oder dem länglichen Hohlraum und dazu konfiguriert, dass er ein chemisches Reagens in den länglichen Hohlraum einzuspeisen; und/oder
mindestens einen Reagenzanschluss (52) in Fluidverbindung mit dem Eingabeabschnitt, dem Ausgabeabschnitt oder dem länglichen Hohlraum und dazu konfiguriert, ungenutzte chemische Reagenzien und/oder Abfallprodukt aus dem länglichen Hohlraum zu entfernen.

10. Reaktionskammer nach Anspruch 1 oder 2 oder einem davon abhängigen Anspruch, wobei eine Schnecke innerhalb des Transporters einen inneren Hohlraum umfasst, der sich entlang ihrer Länge erstreckt, und eine Vielzahl von Perforationen, die eine Fluidverbindung zwischen dem inneren Hohlraum der Schnecke und dem länglichen Hohlraum der Reaktionskammer um die Schnecke herum bereitstellen; und
der innere Hohlraum der Schnecke in Fluidverbindung mit mindestens einem Reagenzanschluss (51, 52) steht, dazu konfiguriert, dem inneren Hohlraum chemische Reagenzien zuzuführen oder aus dem inneren Hohlraum ungenutzte chemische Reagenzien und/oder Abfallprodukte zu entfernen,
optional wobei die Schnecke in mindestens einem Bereich die genannten Perforationen umfasst und die Schnecke in mindestens einem anderen Bereich die genannten Perforationen nicht aufweist.

11. Reaktionskammer nach einem der vorhergehenden Ansprüche, ferner umfassend einen Temperaturregler (70), dazu konfiguriert, die Temperatur des Inhalts des länglichen Hohlraums zu regeln, optional wobei mindestens ein Bereich mit einem Temperaturregler verbunden ist, dazu konfiguriert, die Temperatur des Inhalts des länglichen Hohlraums nur in diesem Bereich zu regeln.

12. Verarbeitungssystem zur kontinuierlichen chemischen Verarbeitung von Fasermaterial, umfassend mindestens eine Reaktionskammer nach einem der vorhergehenden Ansprüche.

13. Verarbeitungssystem zur kontinuierlichen chemischen Verarbeitung von Fasermaterial nach Anspruch 12, umfassend eine Vielzahl von Reaktionskammern nach einem der Ansprüche 1 bis 11, dazu angeordnet, Fasermaterial nacheinander zu verarbeiten, optional wobei:
mindestens zwei Reaktionskammern voneinander verschieden konfiguriert sind; und/oder
eine einzelne Einheit als Ausgabeabschnitt einer ersten Reaktionskammer und als Eingabeabschnitt einer zweiten Reaktionskammer dient.

14. Verfahren zur kontinuierlichen chemischen Verarbeitung von Fasermaterial, umfassend:
Zuführen von Fasermaterial in einen Eingabeabschnitt (31) an einem ersten Ende (21) eines länglichen Hohlraums (15) ;
Ausgeben von Fasermaterial aus einem Ausgabeabschnitt (32) an einem zweiten Ende (22) des länglichen Hohlraums an einem dem ersten Ende gegenüberliegenden Ende des länglichen Hohlraums; und
Treiben des Fasermaterials durch den länglichen Hohlraum von dem ersten Ende zu dem zweiten Ende mittels eines Transporters (40), wobei der Transporter eine Schnecke (41) umfasst, die sich entlang des länglichen Hohlraums von dem Eingabeabschnitt zu dem Ausgabeabschnitt erstreckt,
wobei der längliche Hohlraum mehrere Bereiche (61, 62, 63) umfasst und sich mindestens eines von der Steigung der Schnecke oder Schnecken und dem Abstand zwischen dem zentralen Kern (66) der Schnecke oder Schnecken und dem Rand (67) der Schnecke oder Schnecken in einem Bereich des länglichen Hohlraums von dem entsprechenden Wert einem anderen Bereich unterscheidet.

15. Verfahren zur kontinuierlichen chemischen Verarbeitung von Fasermaterial nach Anspruch 14, wobei die chemische Verarbeitung unter Verwendung einer Reaktionskammer (10) nach einem der Ansprüche 1 bis 11 durchgeführt wird.

## Revendications

1. Chambre de réaction (10) pour le traitement chimique continu de matériau fibreux, comprenant :
une cavité allongée (15) ayant des première (21) et deuxième (22) extrémités à des extrémités opposées de la cavité allongée et conçue pour contenir le matériau fibreux et tout réactif ajouté à celui-ci pour le traitement chimique ;
une section d'entrée (31) à la première extrémité de la cavité allongée, conçue pour introduire le matériau fibreux dans la première extrémité de la cavité allongée ;
une section de sortie (32) à la deuxième extrémité de la cavité allongée, conçue pour faire sortir le matériau fibreux de la deuxième extrémité de la cavité allongée ; et
un transporteur (40) conçu pour entraîner le matériau fibreux de la première extrémité à la deuxième extrémité de la cavité allongée,
dans laquelle le transporteur comprend une vis (41) s'étendant le long de la cavité allongée de la section d'entrée à la section de sortie, et
dans laquelle la cavité allongée comprend plusieurs régions (61, 62, 63), et au moins un paramètre parmi le pas de la vis ou des vis et la séparation entre l'âme centrale (66) de la vis ou des vis et le bord (67) de la vis ou des vis dans une région de la cavité allongée est différent de celui d'une autre région.

2. Chambre de réaction selon la revendication 1, dans laquelle le transporteur comprend une deuxième vis (42), disposée parallèlement à la première vis et s'étendant le long de la cavité allongée de la section d'entrée à la section de sortie, éventuellement dans laquelle le transporteur est conçu de telle sorte que les première et deuxième vis tournent dans le même sens pour entraîner le matériau fibreux de la première extrémité à la deuxième extrémité de la cavité allongée.

3. Chambre de réaction selon la revendication 2, comprenant en outre une boîte d'engrenages (45) conçue pour entraîner les deux vis par l'application d'une force motrice depuis un seul moteur (46).

4. Chambre de réaction selon l'une quelconque des revendications précédentes, conçue de telle sorte que la cavité allongée peut être maintenue à une pression qui est différente de la pression atmosphérique, éventuellement supérieure à la pression atmosphérique.

5. Chambre de réaction selon la revendication 4, dans laquelle la différence de pression entre la cavité allongée et l'atmosphère peut être maintenue à plus de 1 bar, éventuellement plus de 5 bar, éventuellement plus de 7 bar et éventuellement jusqu'à 10 bar.

6. Chambre de réaction selon la revendication 4 ou 5, dans laquelle la section d'entrée est conçue pour introduire le matériau fibreux dans la première extrémité de la cavité allongée pendant que la différence de pression est maintenue entre la cavité allongée et l'atmosphère.

7. Chambre de réaction selon l'une quelconque des revendications 4, 5 et 6, dans laquelle la section de sortie est conçue pour faire sortir le matériau fibreux de la deuxième extrémité de la cavité allongée pendant que la différence de pression est maintenue entre la cavité allongée et l'atmosphère.

8. Chambre de réaction selon l'une quelconque des revendications précédentes, dans laquelle la cavité allongée est positionnée de telle sorte que la deuxième extrémité est plus haute que la première extrémité.

9. Chambre de réaction selon l'une quelconque des revendications précédentes, comprenant en outre :
au moins un orifice à réactif (51) en communication fluidique avec la section d'entrée, la section de sortie ou la cavité allongée et qui est conçu pour introduire un réactif chimique dans la cavité allongée ; et/ou
au moins un orifice à réactif (52) en communication fluidique avec la section d'entrée, la section de sortie ou la cavité allongée et qui est conçu pour retirer les réactifs chimiques inutilisés et/ou les résidus de la cavité allongée.

10. Chambre de réaction selon la revendication 1 ou la revendication 2, ou toute revendication dépendante de celles-ci, dans laquelle une vis à l'intérieur du transporteur comprend une cavité intérieure s'étendant sur sa longueur et une pluralité de perforations qui assurent une communication fluidique entre la cavité intérieure de la vis et la cavité allongée de la chambre de réaction autour de la vis ; et
la cavité intérieure de la vis est en communication fluidique avec au moins un orifice à réactif (51, 52) conçu pour introduire un réactif chimique dans la cavité intérieure ou pour retirer de la cavité intérieure les réactifs chimiques inutilisés et/ou les résidus,
éventuellement dans laquelle, à l'intérieur d'au moins une région, la vis comprend lesdites perforations, et à l'intérieur d'au moins une autre région, la vis ne possède pas lesdites perforations.

11. Chambre de réaction selon l'une quelconque des revendications précédentes, comprenant en outre un régulateur de température (70), conçu pour réguler la température du contenu de la cavité allongée, éventuellement dans laquelle au moins une région est associée à un régulateur de température conçu pour réguler la température du contenu de la cavité allongée dans cette seule région.

12. Système de traitement pour le traitement chimique continu de matériau fibreux, comprenant au moins une chambre de réaction selon l'une quelconque des revendications précédentes.

13. Système de traitement pour le traitement chimique continu de matériau fibreux selon la revendication 12, comprenant une pluralité de chambres de réaction selon l'une quelconque des revendications 1 à 11, agencées pour traiter tour à tour le matériau fibreux, éventuellement dans lequel :
au moins deux chambres de réaction sont conçues différemment l'une de l'autre ; et/ou
une seule unité fonctionne comme la section de sortie d'une première chambre de réaction et la section d'entrée d'une deuxième chambre de réaction.

14. Procédé de traitement chimique continu de matériau fibreux comprenant :
l'introduction du matériau fibreux dans une section d'entrée (31) à une première extrémité (21) d'une cavité allongée (15) ;
la sortie du matériau fibreux depuis une section de sortie (32) à une deuxième extrémité (22) de la cavité allongée à une extrémité opposée de la cavité allongée par rapport à la première extrémité ; et
l'entraînement du matériau fibreux à travers la cavité allongée de la première extrémité à la deuxième extrémité au moyen d'un transporteur (40), le transporteur comprenant une vis (41) s'étendant le long de la cavité allongée de la section d'entrée à la section de sortie,
dans lequel la cavité allongée comprend plusieurs régions (61, 62, 63), et au moins un paramètre parmi le pas de la vis ou des vis et la séparation entre l'âme centrale (66) de la vis ou des vis et le bord (67) de la vis ou des vis dans une région de la cavité allongée est différent de celui d'une autre région.

15. Procédé de traitement chimique continu de matériau fibreux selon la revendication 14, le traitement chimique étant effectué au moyen d'une chambre de réaction (10) selon l'une quelconque des revendications 1 à 11.
